# EUROPEAN PATENT APPLICATION

(11) **EP 4 542 813 A1**
(43) Date of publication of application: **23.04.2025**
(21) Application number: 22946645.3
(22) Date of filing: 22.12.2022
(51) Int. Cl.: H02J 3/38

(54) **PHOTOVOLTAIC SYSTEM AND OPTIMIZER POSITIONING METHOD THEREFOR**

(30) Priority: 17.06.2022 CN 202210686194
(71) Applicant: Sungrow (Shanghai) Co., Ltd., Shanghai 201203 (CN)
(72) Inventor: XU, Chenjia, Shanghai 201203 (CN); YAO, Keliang, Shanghai 201203 (CN); YANG, Yu, Shanghai 201203 (CN); WANG, Xinyu, Shanghai 201203 (CN); TAO, Tinghuan, Shanghai 201203 (CN)
(74) Representative: Zacco Norway AS
(86) International application number: PCT/CN2022/140971
(87) International publication number: WO 2023/240980

(57) **Abstract**

Provided in the present application are a photovoltaic system and an optimizer positioning method therefor. The optimizer positioning method comprises: firstly, an inverter setting an output voltage limit value and/or an output current limit value for an optimizer in each photovoltaic string, and controlling each optimizer to start; and then, for a parallel voltage-difference-free photovoltaic string connected to a boost circuit, the inverter controlling one of the optimizers at least once to change an output voltage, actively making an inter-string voltage difference for the parallel voltage-difference-free photovoltaic string, and then constructing a long string and a short string, which are connected in parallel, so as to form a loop. Since a loop may cause the electrical states of optimizers in a long string and a short string to be different, photovoltaic strings to which the optimizers respectively belong can be distinguished according to the electrical states of the optimizers, such that the optimizers between different photovoltaic strings connected to a boost circuit are automatically distinguished, and string level positioning of the optimizers is also realized.

## Description

The present application claims priority to Chinese Patent Application No.202210686194.X, titled "PHOTOVOLTAIC SYSTEM AND OPTIMIZER POSITIONING METHOD THEREFOR ", filed on June 17, 2022 with the China National Intellectual Property Administration, which is incorporated herein by reference in its entirety.

### FIELD

The present application relates to the technical field of photovoltaic power generation, and in particular to a photovoltaic system and an optimizer positioning method for a photovoltaic system.

### BACKGROUND

An optimizer in a photovoltaic system, namely a photovoltaic power optimizer, is module-level power electronics (MLPE) with a direct-current input and a direct-current output. The optimizer is connected in series to a photovoltaic component, and adopts a current and voltage prediction technology, to ensure that the photovoltaic component always operates in an optimal state, and overcome influence of shadow on the components, inconsistent orientations or different electrical specifications of components on power generation capacity in a photovoltaic power station. In this way, a maximum power output of the photovoltaic component can be achieved and power generation capacity of the system can be improved.

In a photovoltaic power generation system provided with an optimizer, an inverter communicates with the optimizer through power line communication (PLC). The inverter includes a PLC master node controller, and the optimizer serves as a slave node of the PLC. Once the optimizer and the inverter are arranged in the system, a master node of the inverter needs to be informed of topological information of each optimizer in the inverter system, to facilitate instruction control and state positioning in a later operation process. If the inverter does not acquire the topological information of the optimizers thereof, the inverter may acquire, in a case of searching for the optimizers, information of optimizers in other systems due to a crosstalk problem, affecting determination of the master node of the inverter and leading to error control of the master node.

At present, the topological information of each optimizer still requires to be manually entered in order. However, if only correspondence between each optimizer and each Boost circuit of the inverter is implement in the entering process, in the case that the number of photovoltaic strings connected to the Boost circuit is more than one and that the master node of the inverter does not know which optimizers are in the same photovoltaic string, the master node of the inverter may be difficult to determine a long string, causing that the master node of the inverter issues a limit value incorrectly. As a result, the sum of output voltage of the whole string of optimizers exceeds a voltage withstood by the inverter, resulting in over-voltage damage of the inverter.

### SUMMARY

A photovoltaic system and an optimizer positioning method for a photovoltaic system are provided according to the present application, to automatically distinguish optimizers among different photovoltaic strings connected to a Boost circuit.

In order to achieve the above objectives, technical solutions are provided according to the present application as follows.

In a first aspect of the present application, an optimizer positioning method for a parallel-connected photovoltaic string in a photovoltaic system is provided. The photovoltaic system includes an inverter, and multiple photovoltaic strings connected to at least one Boost circuit at a preceding stage of a direct-current bus of the inverter. The optimizer positioning method includes:
setting, by the inverter, an output voltage limit value and/or an output current limit value for each optimizer in the photovoltaic strings;
controlling, by the inverter, the optimizers to start; and
for parallel-connected photovoltaic strings without voltage difference connected to the Boost circuit, controlling, by the inverter, any one of the optimizers each time to change an output voltage, and determining the photovoltaic strings in which the optimizers are provided according to electrical states of the optimizers.

In an embodiment, the changing an output voltage includes an active bypass; or
if the inverter sets the output voltage limit value for each optimizer, after the controlling, by the inverter, each of the optimizers to start, the optimizer positioning method further includes: controlling, by the inverter, the output voltage of the optimizer to reach the output voltage limit value; and the changing the output voltage includes: increasing or decreasing the output voltage limit value.

In an embodiment, the controlling, by the inverter, any one of the optimizers each time to change an output voltage, and determining the photovoltaic strings in which the optimizers are provided according to electrical states of the optimizers, includes:
controlling, by the inverter, one optimizer of the optimizers whose photovoltaic strings are not determined to change the output voltage; and
after controlling the one optimizer of the optimizers whose photovoltaic strings are not determined to change the output voltage each time, detecting, by the inverter, the electrical state of the one optimizer; determining, by the inverter, a further optimizer in a photovoltaic string provided with the optimizer having the changed output voltage according to the electrical states, and determining that remaining optimizers are provided in other photovoltaic strings, until the inverter determines that the respective optimizers are provided in the photovoltaic strings.

In an embodiment, the electrical state includes at least one of an output voltage, an output current, and an operation state.

If the output voltage is decreased, the further optimizer in a photovoltaic string provided with the optimizer having the changed output voltage, include:
an optimizer meeting at least one of conditions: the output voltage being greater than a preset voltage, the output current being less than a preset negative current, and the operation state being a reverse input state.

If the output voltage is increased, the further optimizer in a photovoltaic string provided with the optimizer having the changed output voltage, include:
an optimizer meeting at least one of conditions: an output voltage being less than the preset voltage, the output current being greater than a preset positive current, and the operation state being a positive output state.

In an embodiment, if the inverter has set the output voltage limit value for each optimizer, the condition of the output voltage being greater than the preset voltage is replaced with the output voltage being equal to the output voltage limit value; and the condition of the output voltage being less than the preset voltage is replaced with the output voltage being less than the output voltage limit value.

If the inverter has set the output current limit value for each optimizer, the condition of the output current being less than the preset negative current is replaced with the output current being equal to a negative output current limit value; and the condition of the output current being greater than the preset positive current is replaced with the output current being equal to a positive output current limit value.

In an embodiment, for the parallel-connected photovoltaic strings without voltage difference connected to the Boost circuit, before controlling, by the inverter, any one of the optimizers each time to change an output voltage, the optimizer positioning method further includes:
determining, by the inverter, whether the electrical states of the optimizers in the parallel-connected photovoltaic strings connected to the Boost circuit are consistent;
determining, by the inverter, in response to a consistent electrical state, that the parallel-connected photovoltaic strings are the parallel-connected photovoltaic strings without voltage difference; and
determining, by the inverter, in response to inconsistent electrical states, that optimizers with an output current greater than the preset positive current or less than the preset negative current are provided in one photovoltaic string; and determining that the photovoltaic strings, other than the one photovoltaic string, are the parallel-connected photovoltaic strings without voltage difference, in a case that the number of photovoltaic strings in the parallel-connected photovoltaic strings is more than 2.

In an embodiment, if the inverter set the output current limit value for each optimizer,
the condition of the output current being greater than the preset positive current is replaced with the output current being equal to the positive output current limit value; and
the condition of the output current being less than the preset negative current is replaced with the output current being equal to the negative output current limit value.

In an embodiment, before the determining, by the inverter, whether the electrical states of the optimizers in the parallel-connected photovoltaic strings connected to the Boost circuit are consistent, the method for the optimizers further includes:
determining, by the inverter, whether the optimizers connected to respective Boost circuits are determined;
determining, by the inverter, whether the electrical states of the optimizers in the parallel-connected photovoltaic strings connected to the Boost circuit are consistent, in a case that the optimizers connected to the respective Boost circuits are determined; and
in a case that the optimizers connected to the respective Boost circuits are not determined, controlling, by the inverter, input terminals of the respective Boost circuits to maintain a short-circuited state for a preset duration according to a preset rule; determining the optimizers connected to the respective Boost circuits according to output electrical parameters of all the optimizers in the short-circuited state; and determining whether the electrical states of the optimizers of the parallel-connected photovoltaic strings connected to one of the respective Boost circuits are consistent.

In an embodiment, the output electrical parameters include an output voltage, and/or an output current; and
the determining, by the inverter, the optimizers connected to the respective Boost circuits according to the output electrical parameters of all the optimizers in the short-circuited state, includes:
in the case of the input terminals of the respective Boost circuits in the short-circuited state at a time, determining, by the inverter, that the optimizer with an output voltage equal to zero and/or an output current greater than a preset current or equal to the output current limit value is connected to the Boost circuit having the input terminal in the short-circuited state; and determining that the optimizer with an output voltage not equal to zero and/or an output current equal to zero is not connected to the Boost circuit having the input terminal in the short-circuited state.

In an embodiment, the controlling, by the inverter, the input terminals of the respective Boost circuits to maintain the short-circuited state for the preset duration according to the preset rule includes:
controlling, by the inverter, the input terminals of the respective Boost circuits one by one to maintain the short-circuited state for the preset duration respectively; or
grouping, by the inverter, the Boost circuits; controlling input terminals of part of the Boost circuits in a current group to maintain the short-circuited state for the preset duration; and further grouping the Boost circuits in the current group according to states of the input terminals of the Boost circuits in the current group, until the current group includes one Boost circuit.

In a second aspect of the present application, a photovoltaic system is provided. The photovoltaic system includes an inverter and at least one photovoltaic string.

An optimizer or at least two optimizers having output terminals connected in series are arranged between two terminals of the photovoltaic string, and an input terminal of the optimizer is connected to at least one photovoltaic component;
at least one Boost circuit is provided at a preceding stage of a direct-current bus of the inverter, and an input terminal of the Boost circuit is configured to be connected to the at least one corresponding photovoltaic string; and
the inverter comprises an controller serving as a master node to communicate with the optimizer, and the controller is configured to perform an optimizer positioning method for parallel-connected photovoltaic strings in a photovoltaic system as described according to any one of the first aspects above.

In an embodiment, the Boost circuit is independent of the inverter; or
the Boost circuit is integrated in the inverter, and an output terminal of the Boost circuit is connected to a direct-current side of an inversion circuit in the inverter through the direct-current bus.

In an embodiment, the input terminal of the Boost circuit is connected to one connection port at a direct-current side of the inverter, or at the connection port with at least two branches connected in parallel at a direct-current side of the inverter; and
the connection port is connected to one photovoltaic string, or the connection port is connected in parallel to at least two photovoltaic strings in parallel through a bus bar terminal.

With an optimizer positioning method for parallel-connected photovoltaic strings in a photovoltaic system provided according to the present application, an inverter sets an output voltage limit value and/or an output current limit value for each optimizer in the photovoltaic strings, controls the optimizers to start. For parallel-connected photovoltaic strings without voltage difference connected to the Boost circuit, the inverter controls any one of the optimizers each time to change an output voltage, actively creates voltage difference between the strings of the parallel-connected photovoltaic strings without voltage difference. In this way, a long string and a short string connected in parallel are constructed to form a circulating current. Since the circulating current may cause different electrical states of the optimizers in the long string and the short string, the electrical states of the optimizers may be used to determine the photovoltaic strings provided with the respective optimizers. Therefore, the optimizers of respective photovoltaic strings connected to the Boost circuit can be automatically determined, that is, positioning the optimizer to a specific string.

### BRIEF DESCRIPTION OF THE DRAWINGS

In order to clearly illustrate technical solutions in embodiments of the present application or in the conventional technology, the drawings to be used in the description of the embodiments or the conventional technology are briefly described below. Apparently, the drawings in the following description are only some embodiments of the present application, and other drawings may be obtained by those skilled in the art from the drawings without any creative work.
FIG. 1 to FIG. 3 are three flowcharts of an optimizer positioning method for parallel-connected photovoltaic strings in a photovoltaic system according to embodiments of the present application;
FIG. 4 is a schematic structural diagram of a photovoltaic system according to an embodiment of the present application;
FIG. 5 is schematic structural diagram of a photovoltaic string according to an embodiment of the present application; and
FIG. 6 is a schematic diagram of a specific structure of a photovoltaic system according to an embodiment of the present application.

### DETAILED DESCRIPTION

Technical solutions of embodiments of the present application are clearly and completely described hereinafter in conjunction with the drawings of the embodiments of the present application. Apparently, the embodiments described in the following are only some embodiments of the present application, rather than all embodiments. Any other embodiments obtained by those skilled in the art based on the embodiments in the present application without any creative work fall in the scope of protection of the present application.

In the present application, terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

An optimizer positioning method for a photovoltaic system is provided according to the present application, to automatically distinguishing optimizers among respective photovoltaic strings connected to a Boost circuit.

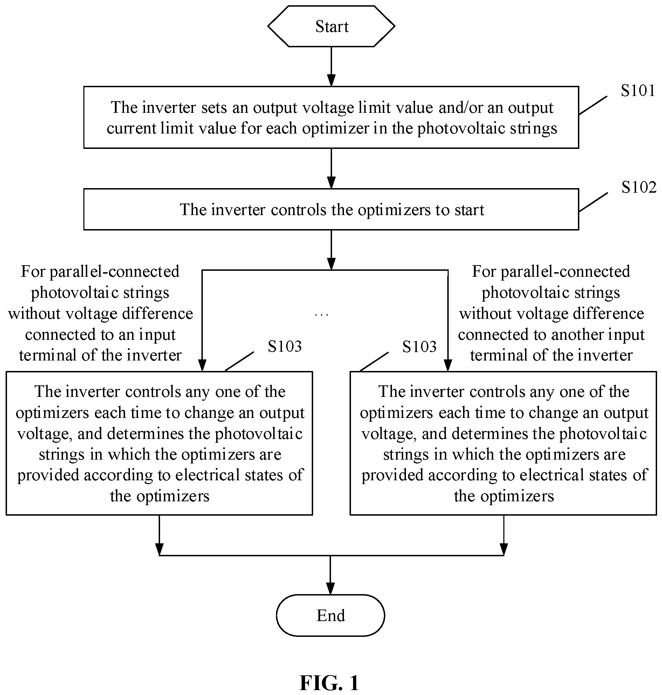

The photovoltaic system includes an inverter, and multiple photovoltaic strings connected to at least one Boost circuit at a preceding stage of a direct-current bus of the inverter. The Boost circuit is connected to at least two photovoltaic strings connected in parallel. Referring to FIG. 1, the optimizer positioning method for parallel-connected photovoltaic strings in a photovoltaic system includes step S101 to S103.

In step S101, the inverter sets an output voltage limit value and/or an output current limit value for each optimizer in the photovoltaic strings.

In practice, the output voltage limit value may be set as Ulmt=10V, and the output current limit value is set as Ilmt=2A, which will not be limited to this application. Both the output voltage limit value and the output current limit value may be set according to actual requirements, which are within the protection scope of the present application.

In step S102, the inverter controls the optimizers to start.

A process of controlling the optimizers to start by the inverter may include: sending, by the inverter, an activation instruction to the optimizers to cause the optimizers to enter an operating mode; and increasing an output voltage of the optimizers through soft start. If the output voltage limit Ulmt has been set in step S101, the output voltage of each optimizer will be increased to reach the output voltage limit Ulmt. If the output voltage limit Ulmt is not set in step S101, the output voltage of each optimizer may be increased to reach a rated output voltage.

In practice, an input terminal of the Boost circuit is connected to at least two photovoltaic strings connected in parallel and having the same voltage. In this case, the at least two photovoltaic strings may be called parallel-connected photovoltaic strings without voltage difference. It is required to perform Step S103 on the parallel-connected photovoltaic strings without voltage difference connected to the Boost circuit. In the case that at least two Boost circuits are respectively connected to parallel-connected voltage photovoltaic strings without voltage difference, it is required to perform step S103 on the parallel-connected photovoltaic strings without voltage difference connected to the two Boost circuits, respectively.

In step S103, the inverter controls any one of the optimizers each time to change an output voltage, and determines the photovoltaic strings in which the optimizers are provided according to electrical states of the optimizers.

In practice, the controlling the optimizer to change the output voltage may be implemented by directly actively bypass the corresponding optimizer. In this case, the output voltage of the corresponding optimizer is zero, and the voltage of the photovoltaic string in which the optimizer is provided will be decreased.

In an embodiment, the output voltage limit Ulmt is set in step S101 and the output voltage of each optimizer reaches the output voltage limit Ulmt in step S102. In this case, the controlling the optimizer to change the output voltage in step 103 may be implemented by increasing the output voltage limit Ulmt of the corresponding optimizer. Accordingly, the output voltage of the corresponding optimizer is increased. Alternatively, the controlling the optimizer to change the output voltage in step S103 may be implemented by decreasing the output voltage limit Ulmt of the corresponding optimizer. Accordingly, the output voltage of the corresponding optimizer is decreased, for example, to a value between zero and the output voltage limit Ulmt in S101.

For a Boost circuit connected to at least two parallel-connected photovoltaic strings with the same voltage, the inverter controls any one of the optimizers to actively bypass or decrease the output voltage limit Ulmt thereof, to decrease the voltage of the photovoltaic string in which this optimizer provided. This is equivalent to shortening the photovoltaic string, which may be called a short string. Other photovoltaic strings keep the original voltage, which is equivalent to keeping an original length. Compared with the short string, those strings may be called long strings. In another embodiment, the inverter controls any one of the optimizers to increase the output voltage limit Ulmt thereof. It causes the photovoltaic string in which this optimizer is provided to be a long string, while other photovoltaic strings are short strings.

Changing the output voltage of any one of the optimizers in any one of the above manners leads to the occurrence of a long string and a short string in the corresponding parallel-connected photovoltaic strings without voltage difference. In this case, a circulating current may be formed between the long and short strings connected in parallel, and the long string inputs a current into the short string. If no output current limit value Ilmt is set in step S101, the inputted current is determined according to the voltage difference between the long and short strings. If the output current limit value Ilmt is set in step S101, the inputted current will not exceed the output current limit value Ilmt. Two photovoltaic strings connected in parallel and having the same voltage are taken as an example to illustrate. In this case, the output current of each optimizer in the long string is equal to the output current limit value Ilmt, while the output current of each optimizer in the short string is equal to -Ilmt, that is, the negative output current limit value. Meanwhile, the optimizers in the long string are in the positive output state, while the optimizers in the short string are in the reverse input state. In addition, since the long and short strings are connected in parallel, the output voltage of each optimizer in the short string is equal to its rated output voltage, while the voltage shared to the output terminal of each optimizer in the long string is lower than its rated output voltage and greater than 0V, in the case that no output voltage limit Ulmt is set in step S101. In the case that the output voltage limit Ulmt is set in step S101, the output voltage of each optimizer in the short string is the output voltage limit Ulmt, while the voltage shared to the output terminal of each optimizer in the long string is lower than the output voltage limit Ulmt and greater than 0V.

On the basis of the electrical state of the optimizer which may be at least one of an output voltage, an output current and an operation state of each optimizer, the optimizer in the photovoltaic string with a changed voltage in the current state may be identified. Both the output voltage limit Ulmt and the output current limit Ilmt being set in step S 101 are taken as an example. If the corresponding photovoltaic string is changed to a short string, the optimizer, which has an output voltage Ulmt and an output current -Ilmt, and operates in the reverse input state, is provided in the same photovoltaic string as a current optimizer with the decreased output voltage. If the corresponding photovoltaic string is changed to a long string, the optimizer, which has the output voltage less than Ulmt and the output current Ilmt, and operates in the positive output state, is provided in the same photovoltaic string as the current optimizer with the increased output voltage. In the case that two photovoltaic strings are connected in parallel, it can be determined that the remaining optimizers are provided in another photovoltaic string. In the case that more than two photovoltaic string are connected in parallel, the above control of changing the output voltage is performed for multiple times, and multiple photovoltaic strings with the changed voltage can be identified, until all photovoltaic strings in which the respective optimizers are provided are identified, thereby positioning all optimizers to the respective parallel-connected photovoltaic strings without voltage difference.

With the optimizer positioning method for parallel-connected photovoltaic strings in the photovoltaic system provided according to the present application, an inverter controls any one of the optimizers each time to change an output voltage, actively creates a voltage difference between strings of the corresponding photovoltaic strings. In this way, a long string and a short string connected in parallel are constructed to form a circulating current. Since the circulating current may cause different electrical states of the optimizers in the long string and the short string, the electrical states of the optimizers may be used to determine the photovoltaic strings provided with the respective optimizers. Therefore, the optimizers of respective photovoltaic strings connected to the Boost circuit can be automatically determined, that is, positioning the optimizer to a specific string, which is beneficial to the differential control of the inverter for each photovoltaic string.

On the basis of the above embodiment, in the optimizer positioning method for parallel-connected photovoltaic strings in the photovoltaic system, the step S103 of the controlling, by the inverter, any one of the optimizers each time to change an output voltage and determining the photovoltaic strings in which the optimizers is provided according to electrical states of the optimizers are implemented as follows. The inverter controls any one of the optimizers whose photovoltaic strings are not determined, to change the output voltage. Moreover, the inverter detects, after controlling the corresponding optimizer to change the output voltage each time, the electrical state of each optimizer, determines a further optimizer in the same photovoltaic string provided with the optimizer having the changed output voltage according to the electrical states, and determines that remaining optimizers are provided in other photovoltaic strings, until the inverter determines the respective photovoltaic strings in which the optimizers are provided.

As described in the above embodiment, the electrical state includes at least one of the output voltage, the output current, and the operation state.

If the output voltage is decreased in step S103, the further optimizer in the photovoltaic string provided with the optimizer having the changed output voltage is an optimizer meeting at least one of conditions: an output voltage being greater than a preset voltage, an output current being less than a preset negative current, and an operation state being a reverse input state.

If the output voltage is increased in step S103, the further optimizer in a photovoltaic string provided with the optimizer having the changed output voltage is an optimizer meeting at least one of conditions: an output voltage being less than the preset voltage, an output current being greater than a preset positive current, and an operation state being a positive output state.

The various preset values for determining and comparison and determination are used to present the occurrence of the circulating current among the parallel-connected photovoltaic strings, which can be set according to actual situations. It should be noted that, if the output voltage limit value Ulmt of the optimizer is set in step S101, the condition of the output voltage being greater than the preset voltage is replaced with the output voltage being equal to the output voltage limit value Ulmt, in the case that the output voltage is decreased; and the condition of the output voltage being less than the preset voltage is replaced with the output voltage being less than the output voltage limit value Ulmt, in the case that the output voltage is increased. If the output current limit value Ilmt is set in step S101, the condition of the output current being less than the preset negative current is replaced with the output current being equal to a negative output current limit value Ilmt, in the case that the output voltage is decreased; and the condition of the output current being greater than the preset positive current is replaced with the output current being equal to a positive output current limit value Ilmt, in the case that the output voltage is increased.

The case that both the output voltage limit value Ulmt and the output current limit value Ilmt being set in step S101, and the output voltage being decreased, is taken as an example for illustrating. For two parallel-connected photovoltaic strings connected to the Boost circuit and having the same voltage, the inverter controls any one of the optimizers to decrease the output voltage, and a circulating current may be generated between the long and short strings connected in parallel. In this case, the output current of each optimizer in the short string is equal to -Ilmt (that is, a negative output current limit value). When two photovoltaic strings are connected in parallel, only one long string is generated, and the output current of each optimizer in the long string is equal to the output current limit value Ilmt. When three strings are connected in parallel, two long strings are generated, the output current of each optimizer in the long strings is equal to Ilmt/2. Similarly, when n photovoltaic strings are connected in parallel, n-1 long strings are generated, and the output current of each optimizer in the long strings is equal to Ilmt/ (n-1). No matter how many photovoltaic strings are connected in parallel, each optimizer in the long strings is in the positive output state, and each optimizer in the short strings is in the reverse input state. In addition, the output voltage of each optimizer in the short strings is equal to the output voltage limit Ulmt, while the output voltage of each optimizer in the long string is between 0 and Ulmt.

After controlling any one of the optimizers to decrease the output voltage for the first time, each optimizer belonging to the short string in the current state can be identified based on the electrical states of optimizers, which is determined to be provided in the same photovoltaic string as the optimizer having the decreased output voltage. In this case, if only two photovoltaic strings are connected in parallel, each optimizer which has the output voltage between 0 and Ulmt, output current equal to Ilmt, and is in the positive output state, is provided in the above long string, that is, the further photovoltaic string. The principle of the case of increasing the output voltage may be in a similar manner, which will not be described herein.

It should be noted that, in a case that n photovoltaic strings are connected in parallel, n is an integer greater than 2, after any one of the optimizers is controlled to change the output voltage for the first time, the remaining optimizers are determined to be provided in the other n-1 photovoltaic group strings. For example, the output voltage is decreased for the first time, each optimizer with an output voltage between 0 and Ulmt, an output current equal to Ilmt/ (n-1), and operating in a positive output state is determined to be provided in the other n-1 photovoltaic group strings. However, the specific photovoltaic string to which each remaining optimizer belongs cannot be determined. These photovoltaic strings have the same length currently. After any one of the remaining optimizers is controlled to change the output voltage for another time, a new short string and a new long string may be generated again. Through the above process for identifying the electrical states, the optimizers in the photovoltaic strings having the changed voltage may be determined for another time. The above process is repeated until all optimizers are determined to be provided in the respective photovoltaic strings, thereby positioning the optimizer to the parallel-connected photovoltaic strings without voltage difference.

It should be noted based on the above embodiments that after the system installation is complement, it may occur that photovoltaic strings with different lengths are connected in parallel in an initial state. In this case, the electrical state of each optimizer may be determined after all optimizers are started. If the electrical states of optimizers in the parallel-connected photovoltaic strings are inconsistent, a short string or a long string with a length different from other photovoltaic strings can be directly identified. In the case that two photovoltaic strings are connected in parallel, the above control process of changing the output voltage does not need to be performed. In the case that more than two photovoltaic strings are connected in parallel, a photovoltaic string with a special length can be identified first, thus reducing a control process of changing the output voltage that needs to be performed later for one time.

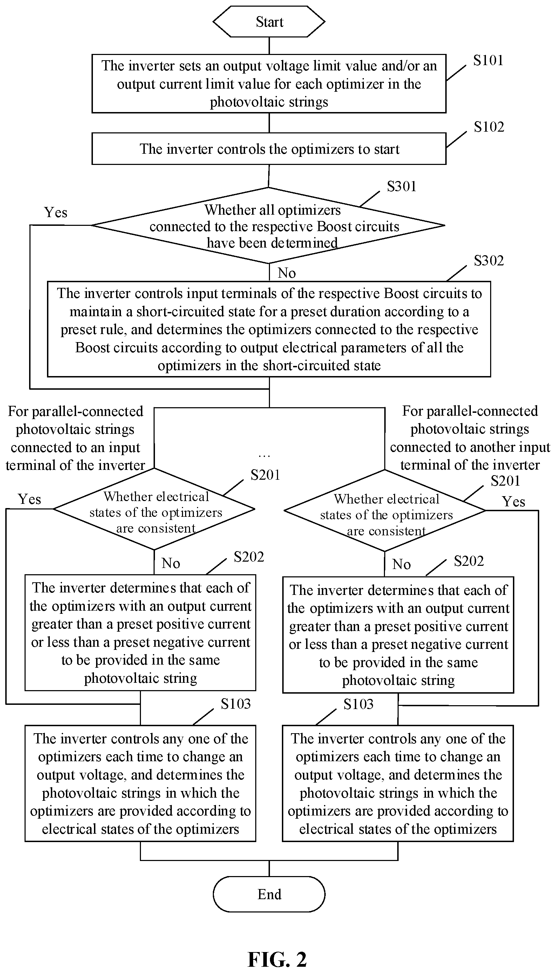

On the basis of the above embodiments, referring to FIG. 2, the optimizer positioning method for parallel-connected photovoltaic strings in a photovoltaic system is provided according to an embodiment of the present application. Before the step S103, for the parallel-connected photovoltaic strings connected to the Boost circuit, the method further includes steps S201 to S202.

In step S201, the inverter determines whether the electrical states of the optimizers are consistent.

If the electrical states are consistent, it is determined that the parallel-connected photovoltaic strings are the parallel-connected photovoltaic strings without voltage difference, and step S103 is performed. If the electrical states are inconsistent, step S202 is first performed, then it is determined that the remaining other photovoltaic strings are the parallel-connected photovoltaic strings without voltage difference in a case that the number of photovoltaic strings in the corresponding parallel-connected photovoltaic strings is more than 2, and step S103 is performed.

In step S202, the inverter determines each of the optimizer with an output current greater than the preset positive current or less than the preset negative current to be provided in the same photovoltaic string.

If the output current limit Ilmt is set in step S101, in step S202, the condition of the output current being greater than the preset positive current is replaced with the output current being equal to the positive output current limit value; and the condition of the output current being less than the preset negative current is replaced by the output current being equal to the negative output current limit value.

A case that both the output voltage limit value Ulmt and the output current limit value Ilmt are set in S101 is taken as an example for illustrating.

It is assumed that an input terminal of a Boost circuit is connected with three photovoltaic strings which are connected in parallel. Two photovoltaic strings have the same length longer than the other photovoltaic string. That is, the input terminal is connected with two long strings and one short string connected in parallel. After all optimizers are started, the two long strings output a current into the short string. Each of the optimizers in the short string is in the electrical state of the output voltage equal to Ulmt, the output current equal to -Ilmt, and the operation state being reverse input state. Each of the optimizers in the two long strings is in the electrical state of the output voltage between 0 and Ulmt, the output current equal to Ilmt/2, and the operation state being positive output state. As result, the optimizers in the short string can be identified, and then step S103 is performed on the two long strings.

It is assumed that an input terminal of a Boost circuit is connected with three photovoltaic strings which are connected in parallel. Two photovoltaic strings have the same length shorter than the other photovoltaic string. That is, the input terminal is connected with two short strings and one long string connected in parallel. After all optimizers are started, the long string outputs a current into the two short strings. Each of the optimizers in the long string is in the electrical state of the output voltage between 0 and Ulmt, the output current equal to Ilmt, and the operation state being positive output state. Each of the optimizers in the two short strings is in the electrical state of the output voltage equal to Ulmt, the output current equal to -Ilmt/2, and the operation state being reverse input state. As result, each optimizer in the long string can be identified, and then step S103 is performed on the two short strings.

The above method can be applied to the case of more than three photovoltaic strings connected in parallel, which will not be repeated herein.

In this embodiment, each optimizer in a photovoltaic string with a special length may be directly determined through steps S201 and S202, to simplify the string-level optimizer positioning process.

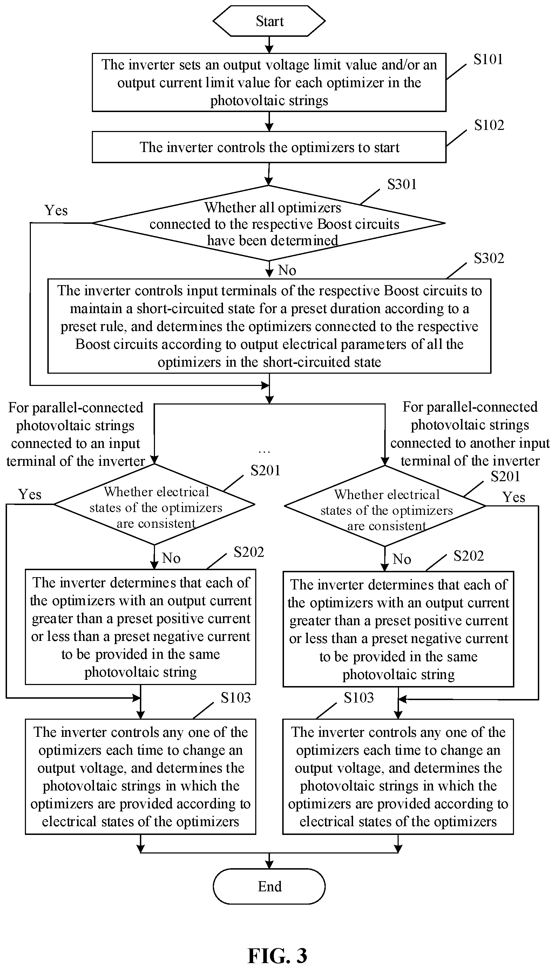

In practice, if the correspondence between the optimizers and the respective Boost circuit of the inverter has been implemented by manually entering after system installation, all optimizers may be positioned to the respective strings according to any one of the above embodiments. However, if the above manual entering process is not performed after the system installation, for example because of low efficiency and error-prone of manual entering process, the photovoltaic strings connected to each Boost circuit may be determined first by the inverter. That is, on the basis of the above embodiments, as shown in FIG. 3 (on the basis of FIG.2 for example), the optimizer positioning method for parallel-connected photovoltaic strings in the photovoltaic system, after the step S102, further includes steps S301 to S302.

In step S301, the inverter determines whether all optimizers connected to the respective Boost circuits have been determined.

Step S201 is performed on the photovoltaic strings connected to the Boost circuits if all optimizers connected to the respective Boost circuits are determined.

If the optimizers connected to the respective Boost circuits are not determined, step S302 is performed first, and then step S201 is performed on the photovoltaic strings connected to the Boost circuits.

In step S302, the inverter controls input terminals of the respective Boost circuits to maintain a short-circuited state for a preset duration according to a preset rule, and determines the optimizers connected to the respective Boost circuits according to the output electrical parameters of all the optimizers in the short-circuited states.

In step S302, the controlling, by the inverter, the input terminals of the respective Boost circuits to maintain the short-circuited state for the preset duration according to the preset rule may be implemented as follows. The inverter controls the input terminals of the respective Boost circuits to maintain the short-circuited state for the preset duration one by one. Alternatively, the inverter groups all the Boost circuits, controls input terminals of part of the Boost circuits in a current group to maintain the short-circuited state for the preset duration each time, and further groups the Boost circuits in the current group according to states of the input terminals of the Boost circuits in the current group, until one group includes one Boost circuit.

In practice, the output electrical parameters may include an output voltage, and/or an output current. In step S302, the determining, by the inverter, the optimizers connected to the respective Boost circuits according to the output electrical parameters of all the optimizers in the short-circuited states may include: in the case of the input terminals of the respective Boost circuits in the short-circuited state at a time, determining, by the inverter, that the optimizer with an output voltage equal to zero and/or an output current greater than a preset current or equal to the output current limit value is connected to the Boost circuit having the input terminal in the short-circuited state; and determining, by the inverter, that the optimizers with an output voltage not equal to zero and/or an output current equal to zero is not connected to the Boost circuit having the input terminal in the short-circuited state.

If the output current limit value Ilmt is not set in step S101, the output current of each optimizer in the photovoltaic strings that are connected to the Boost circuit having the input terminal in the short-circuited state will reach the short-circuit current, which can be identified by determining the current being greater than the preset current value. However, if the output current limit value Ilmt set in step S101, the output current of each optimizer in the photovoltaic strings connected to the Boost circuit having the input terminal in the short-circuited state can only reach the output current limit value Ilmt.

A scenario where the inverter automatically determines the Boost circuit and the string connected to each optimizer is considered. After the system is powered on, the inverter first sends a search instruction to all optimizers. The optimizers send the serial numbers thereof to the inverter in response to the search instruction. The inverter sets an output voltage limit Ulmt and an output current limit Ilmt to the optimizers in step S101, and control each optimizer to start and increase the output voltage of each optimizer to the output voltage limit Ulmt in step S102. The inverter determines the Boost circuits connected to the respective optimizers in steps S301 and S302. In this case, for the parallel-connected photovoltaic strings connected to the Boost circuit, the inverter identifies a photovoltaic string with a special length in steps S201 and S202. The inverter may perform, according to the requirements, Step S103 on the parallel-connected photovoltaic strings without voltage difference connected to the corresponding Boost circuits, to classify the optimizers according to the photovoltaic strings in which the optimizers are provided, based to the different electrical states of the optimizers in the photovoltaic strings, so as to position all the optimizers in one photovoltaic string. Through the above process, the string-level automatic networking and positioning of all optimizers is implemented, avoiding the process of manually entering the information of each optimizer, and improving the efficiency of networking and reducing the probability of errors.

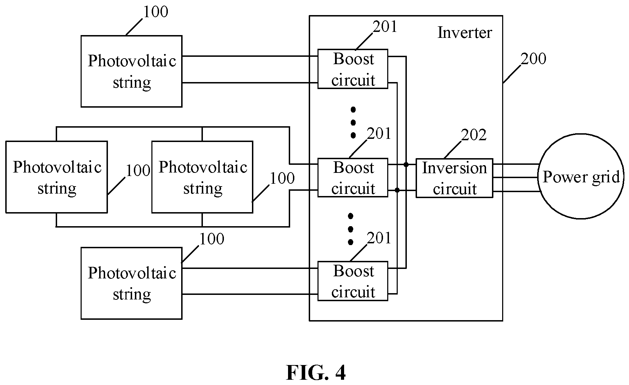

In another embodiment of the present application, a photovoltaic system is provided. As shown in FIG. 4, the photovoltaic system includes an inverter 200 and at least one photovoltaic string 100.

At least one Boost circuit 201 is provided at a preceding stage of a direct-current bus of the inverter 200, and an input terminal of each Boost circuit 201 is connected to at least one corresponding photovoltaic string 100.

It should be noted that, as shown in FIG. 4, all Boost circuits 201 may be integrated in the inverter 200, and output terminals of the Boost circuits 201 are connected to the direct-current side of the inversion circuit 202 in the inverter 200 through the direct-current bus. In practice, the Boost circuits 201 may further be independent of the inverter 200 (not shown in drawings), which depends on specific application environment and falls within the protection scope of the present application.

The inverter 200 is connected to a corresponding applicable single-phase or three-phase grid according to different models of the inverter 200.

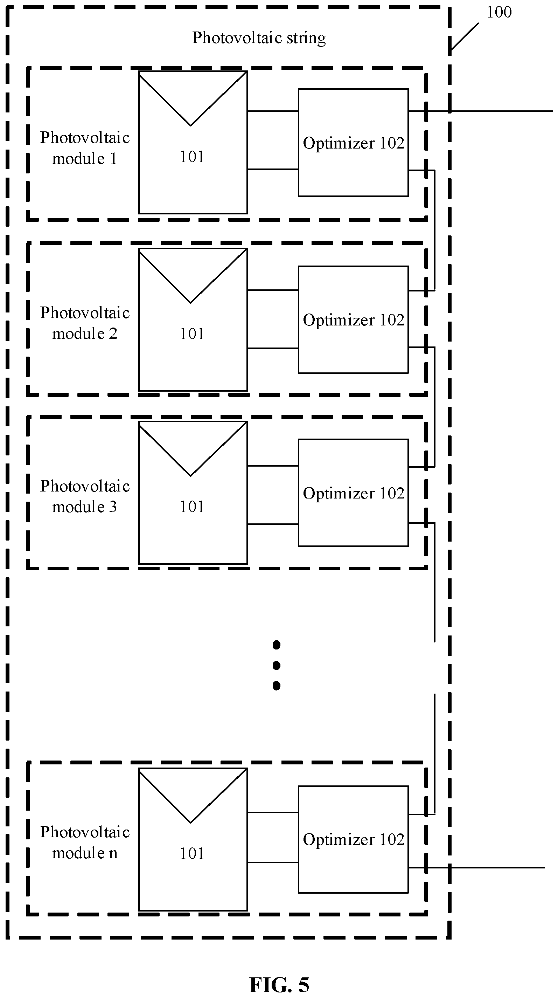

As shown in FIG. 5, an optimizer 102 or at least two optimizers 102 having output terminals connected in series are arranged between two terminals of the photovoltaic string 100, and the input terminal of the optimizer 102 is connected to at least one photovoltaic component 101.

The inverter 200 includes a controller serving as a master node. The controller communicates with each optimizer 102 and is configured to perform the optimizer positioning method for parallel-connected photovoltaic strings in the photovoltaic system described according to any one of the above embodiments. The specific execution process and principles of the optimizer positioning method may be referred to the above embodiments, and will not be repeated herein.

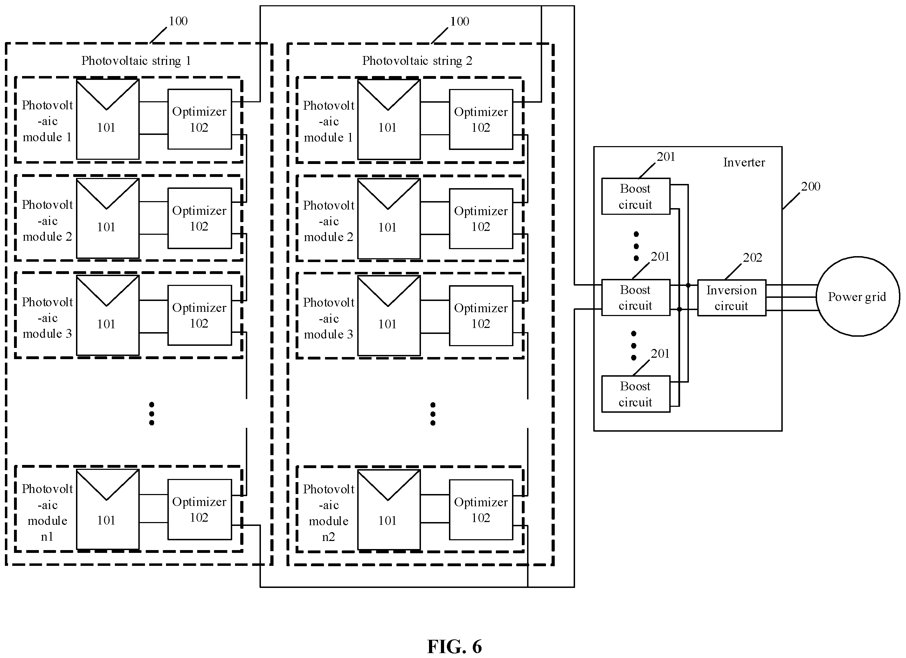

As shown in FIG. 4 and FIG. 6, the main circuit of the inverter 200 includes an inversion circuit 202 and at least one Boost circuit 201. For example, the inverter 200 may include m Boost circuits (Boost 1, ... Boost x, ... and Boost m as shown in FIG. 6), where m is a positive integer greater than or equal to 1.

In practice, the input terminal of each Boost circuit 201 may be connected to one connection port of the direct-current side of the inverter 200, or may be connected to at least two connection ports connected in parallel at the direct-current side of the inverter 200. The settings of input terminals of the respective Boost circuits 201 may be the same or different, depending on the specific application environment, which are all within the protection scope of the present application. The connection port connected to the input terminal of each Boost circuit 201 may be connected to one photovoltaic string 100, or may be connected in parallel to at least two photovoltaic strings 100 through a bus bar terminal, which depends on the specific application environment and falls within the protection scope of the present application.

In an embodiment, each Boost circuit 201 includes an input terminal, which may be called an MPPT port. Each MPPT port may be divided into two parallel-connected connection ports inside the inverter 200, and the parallel-connected connection port may be called PV ports. Alternatively, each MPPT port may directly serve as a PV port. Each PV port may be connected to a photovoltaic string 100, or may be connected to two photovoltaic strings 100 connected in parallel through the bus bar terminal. A system may be connected to at least two photovoltaic strings 100.

Referring to FIG. 5 and FIG. 6, it is assumed that each photovoltaic string 100 includes n photovoltaic modules (photovoltaic module 1 to photovoltaic module n as shown in FIG. 5 and FIG. 6), n is a positive integer greater than or equal to 2. n is less than or equal to 25 in a case that the inverter 200 is a single-phase inverter. n is less than or equal to 50 in a case that the inverter 200 is a three-phase inverter. Since each photovoltaic component is provided with an optimizer in the system, each photovoltaic module includes a photovoltaic unit and an optimizer 102. The photovoltaic unit includes at least one photovoltaic component 101. The photovoltaic unit is connected to the input terminal of the optimizer 102. The output terminals of all optimizers 102 in the photovoltaic string 100 are connected in series. That is, an optimizer 102 includes a positive output terminal connected to a negative output terminal of a previous optimizer 102, and a negative output terminal connected to a positive output terminal of a next optimizer 102. An output terminal of the last optimizer in the photovoltaic string is connected to a PV port of the inverter 200.

It should be noted that, the number of photovoltaic modules in different photovoltaic strings 100 arranged in the same system may be different. The series-parallel connection mode of photovoltaic strings 100 connected to different MPPT ports may be inconsistent, and the powers of photovoltaic units may be inconsistent.

In practice, the MPPT port of the Boost circuit in the inverter 200 may not be connected to the photovoltaic string 100, or may be connected to one to three photovoltaic strings 100. In the inverter 200, at least one Boost circuit includes an MPPT port connected to at least two photovoltaic strings 100. For example, in a three-phase household inverter, each MPPT port is connected to two photovoltaic strings 100. In practice, the parallel-connected photovoltaic strings connected to each MPPT port may be two or more than two photovoltaic strings 100 connected in parallel, which depend on the specific application environment and fall within the protection scope of the present application.

FIG. 6 shows a structure of parallel-connected photovoltaic strings in a photovoltaic system provided with the optimizers 102 for each photovoltaic module. The structure is formed by two photovoltaic strings (photovoltaic string 1 and photovoltaic string 2 as shown in FIG. 6) 100 connected in parallel. A photovoltaic string 1 includes n1 photovoltaic modules, and a photovoltaic string 2 includes n2 photovoltaic modules. n1 and n2 may be the same or different. If n1 is the same as n2, the two photovoltaic strings may be called same parallel-connected strings. If n1 is different from n2, the photovoltaic strings may be called differential parallel-connected strings.

Main steps of the optimizer positioning method will be described as follows.
(1) The optimizer positioning method may be performed in a certain precondition.
   A controller of the inverter, serving as a master node, implements automatically networking through step S302 described in the above embodiments, or can distinguish all optimizer information of parallel-connected photovoltaic strings connected to the same MPPT port through manually entered information. However, the controller does not distinguish the specific optimizer is provided in which photovoltaic string.
(2) In the optimizer positioning method, the output electrical parameters of the optimizers are set first.
   Referring to Step S101 described in the above embodiments, the master node of the inverter sends a setting instruction to each optimizer. The setting instruction may include the output voltage limit value Ulmt and the output current limit value Ilmt, which can be set according to the actual requirements. For example, Ulmt=10V and Ilmt=2A, which will not be limited to this. During this process, each optimizer is in a safe mode with an output voltage of 1V
(3) Then, all optimizers may be started in the optimizer positioning method.
   Referring to step S102 described in the above embodiments, the inverter master node broadcasts the activation instruction. Upon receiving the activation instruction, the optimizer switches from the safe mode to an operating mode, performs soft start, and gradually increases the output voltage until the output voltage limit Ulmt. Then the master node of the inverter collects the voltage and current states of all optimizers.
(4) The electrical state of each optimizer is determined in the optimizer positioning method.

Referring to steps S201 and S202 described in the above embodiment, the master node of the inverter may perform determination according to the voltage and current states of the started optimizers, in step S201. If all optimizers have an output voltage Ulmt and an output current Ilmt, it is indicated that no circulating current is formed, and the parallel-connected photovoltaic strings are determined as the same parallel-connected strings (that is, the parallel-connected photovoltaic strings without voltage difference). If part of optimizers have the output voltage between 0V and Ulmt, and the output current Ilmt, and other part of optimizers have the output voltage Ulmt and the output current -Ilmt, it is indicated that the lengths of the parallel-connected strings are different, that is, the number of optimizers in the parallel-connected strings shown in FIG. 6 are different. It is determined that the parallel-connected photovoltaic strings are differential parallel-connected strings.

The structure shown in FIG. 6 is taken as an example. In the case that the structure is determined as differential parallel-connected strings, the optimizers with the output voltage between 0V and Ulmt and the output current Ilmt may be positioned to be provided in the same photovoltaic string. The optimizers with the output voltage Ulmt and output current equal to -Ilmt may be positioned at another photovoltaic string. Positioning is completed and the process is terminated. However, if photovoltaic strings are determined to be the same parallel-connected strings, step (5) requires to be performed.

(5) Any one of the optimizers whose photovoltaic string is not determined in the parallel-connected photovoltaic strings, that is, any one of optimizers in the above parallel-connected photovoltaic strings without voltage difference, is controlled to change the output voltage.

Referring to step S103 described in the above embodiment, an active bypass control is taken as an example for illustrating. The master node of the inverter selects any one of the optimizers and sends an active bypass instruction to the selected optimizer. After receiving the active bypass instruction, the optimizer switches from the operating mode to the active bypass mode. The output of the optimizer is bypassed and the output voltage is equal to zero, resulting in the difference between the two photovoltaic strings that are the same parallel-connected strings in the structure shown in FIG. 6. Thus, the circulating current is generated. In this case, the master node of the inverter collects the voltage and current states of all optimizers.

The master node of the inverter performs determination according to the voltage and current states of the started optimizer. The optimizers with an output voltage between 0V and Ulmt and an output current Ilmt may be positioned in the same photovoltaic string. The optimizers with an output voltage Ulmt and an output current -Ilmt, as well as optimizers that are actively bypassed, may be positioned in another photovoltaic string. In this case, the positioning is completed and the process is terminated.

Through the above process, by collecting the information of all optimizers connected to the MPPT ports of each Boost circuit, the photovoltaic strings in which the respective optimizers are provided can be automatically determined and the string-level position of the optimizers can be implemented for the parallel-connected photovoltaic strings.

The same or similar parts among the embodiments of the present application may be referred to each other, and each of the embodiments emphasizes differences from other embodiments. In particular, the system or system embodiment is substantially similar to the method embodiment, and therefore is described relatively briefly. For relevant details, reference can be made to the description of the method embodiment. The systems and system embodiments described above are only illustrative, in which the units described as separate components may or may not be physically separated, and the components shown as units may or may not be physical units, that is, may be located in one place, or distributed over multiple network elements. Some or all of the modules may be selected as needed to achieve the purpose of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the components and steps of each example have been described in general terms of functionality in the above description. Whether these functions are performed in hardware or software depends on the specific application and design constraints of the technical solution. Those skilled in the art may implement the described functionality in various manners for each specific application. Such implementations should be considered to be within the scope of the present application.

Based on the above description of the disclosed embodiments, the features described in the different embodiments in the present application may be replaced or combined with each other, so that those skilled in the art can implement or use the present application. Various modifications to these embodiments will be apparent by those skilled in the art, and the generic principles defined herein may be implemented in other embodiments without departing from the spirit or scope of the present application. Therefore, the present application is not limited to the embodiments described herein, but should be in accordance with the broadest scope consistent with the principle and novel features disclosed herein.

## Claims

1. An optimizer positioning method for parallel-connected photovoltaic strings in a photovoltaic system, wherein the photovoltaic system comprises an inverter and photovoltaic strings connected to at least one Boost circuit at a preceding stage of a direct-current bus of the inverter, and the optimizer positioning method comprises:
setting, by the inverter, an output voltage limit value and/or an output current limit value for each optimizer in the photovoltaic strings;
controlling, by the inverter, the optimizers to start; and
for parallel-connected photovoltaic strings without voltage difference connected to the Boost circuit, controlling, by the inverter, any one of the optimizers each time to change an output voltage, and determining the photovoltaic strings in which the optimizers are provided according to electrical states of the optimizers.

2. The optimizer positioning method for the parallel-connected photovoltaic strings in the photovoltaic system according to claim 1, wherein the changing the output voltage comprises an active bypass; or
if the inverter sets the output voltage limit value for each optimizer, after the controlling, by the inverter, the optimizers to start, the optimizer positioning method further comprises: controlling, by the inverter, the output voltage of the optimizer to reach the output voltage limit value; and the changing the output voltage comprises: increasing or decreasing the output voltage limit value.

3. The optimizer positioning method for the parallel-connected photovoltaic strings in the photovoltaic system according to claim 1, wherein the controlling, by the inverter, any one of the optimizers each time to change the output voltage and determining the photovoltaic strings to which the optimizers are provided according to the electrical states of the optimizers comprises:
controlling, by the inverter, one of the optimizers whose photovoltaic strings are not determined, to change the output voltage;
after controlling the one optimizer of the optimizers whose photovoltaic strings are not determined to change the output voltage each time, detecting, by the inverter, the electrical state of the optimizer; determining a further optimizer in the photovoltaic string provided with the optimizer having the changed output voltage according to the electrical states, and determining that remaining optimizers are provided in other photovoltaic strings, until the inverter determines that the respective optimizers are provided in the photovoltaic strings.

4. The optimizer positioning method for the parallel-connected photovoltaic strings in the photovoltaic system according to claim 3, wherein the electrical state comprises at least one of an output voltage, an output current and an operation state;
in a case that the output voltage is decreased, the further optimizer in the photovoltaic string provided with the optimizer having the changed output voltage, comprise:
an optimizer meeting at least one of conditions:
the output voltage being greater than a preset voltage,
the output current being less than a preset negative current, and
the operation state being a reverse input state; and
in a case that the output voltage is increased, the further optimizer in the photovoltaic string provided with the optimizer having the changed output voltage, comprise:
an optimizer meeting at least one of conditions:
the output voltage being less than the preset voltage,
the output current being greater than a preset positive current, and
the operation state being a positive output state.

5. The optimizer positioning method for the parallel-connected photovoltaic strings in the photovoltaic system according to claim 4, wherein if the inverter sets the output voltage limit value for each optimizer, the condition of the output voltage being greater than the preset voltage is replaced with the output voltage being equal to the output voltage limit value; and the condition of the output voltage being less than the preset voltage is replaced with the output voltage being less than the output voltage limit value; and
if the inverter set the output current limit value for the optimizers, the condition of the output current being less than the preset negative current is replaced with the output current being equal to a negative output current limit value; and the condition of the output current being greater than the preset positive current is replaced with the output current being equal to a positive output current limit value.

6. The optimizer positioning method for the parallel-connected photovoltaic strings in the photovoltaic system according to any one of claims 1 to 5, wherein for the parallel-connected photovoltaic strings without voltage difference connected to the Boost circuit, before controlling, by the inverter, any one of the optimizers each time to change an output voltage, the optimizer positioning method further comprises:
determining, by the inverter, whether the electrical states of the optimizers in the parallel-connected photovoltaic strings connected to the Boost circuit are consistent;
determining, by the inverter, in response to a consistent electrical state, that the parallel-connected photovoltaic strings are the parallel-connected photovoltaic strings without voltage difference; and
determining, by the inverter, in response to inconsistent electrical states, that the optimizers with an output current greater than the preset positive current or less than the preset negative current are provided in one photovoltaic string; and determining that the photovoltaic strings, other than the one photovoltaic string, are the parallel-connected photovoltaic strings without voltage difference, in a case that the number of photovoltaic strings of the parallel-connected photovoltaic strings is more than 2.

7. The optimizer positioning method for the parallel-connected photovoltaic strings in the photovoltaic system according to claim 6, wherein if the inverter set the output current limit value for each optimizer,
the condition of the output current being greater than the preset positive current is replaced with the output current being equal to the positive output current limit value; and
the condition of the output current being less than the preset negative current is replaced with the output current being equal to the negative output current limit value.

8. The optimizer positioning method for the parallel-connected photovoltaic strings in the photovoltaic system according to claim 6, wherein before the determining, by the inverter, whether the electrical states of the optimizers in the parallel-connected photovoltaic strings connected to the Boost circuit are consistent, the optimizer positioning method further comprises:
determining, by the inverter, whether the optimizers connected to the respective Boost circuits are determined,
in a case that the optimizers connected to the Boost circuit have been determined, performing the step of determines, by the inverter, whether the electrical states of the optimizers of the parallel-connected photovoltaic strings connected to the Boost circuit are consistent; and
in a case that the optimizers connected to the Boost circuit are not determined, controlling, by the inverter, input terminals of the respective Boost circuits to maintain a short-circuited state for a preset duration according to a preset rule, and determining the optimizers connected to the respective Boost circuits according to the output electrical parameters of all the optimizers in the short-circuited state; and performing the step of determining, by the inverter, whether the electrical states of the optimizers of the parallel-connected photovoltaic strings connected to the Boost circuit are consistent.

9. The optimizer positioning method for the parallel-connected photovoltaic strings in the photovoltaic system according to claim 8, wherein the output electrical parameters comprise: an output voltage and/or an output current; and
the determining, by the inverter, the optimizers connected to the respective Boost circuits according to the output electrical parameters of all the optimizers in the short-circuited states, comprises:
in a case of the input terminals of the respective Boost circuits in the short-circuited state at a time, determining, by the inverter, that the optimizers with an output voltage equal to zero and/or an output current greater than a preset current or equal to the output current limit value is connected to the Boost circuit having the input terminal in the short-circuited state; determining that the optimizer with an output voltage not equal to zero and/or an output current equal to zero is not connected to the Boost circuit having the input terminal in the short-circuited state.

10. The optimizer positioning method for the parallel-connected photovoltaic strings in the photovoltaic system according to claim 8, wherein the controlling, by the inverter, the input terminals of the Boost circuits to maintain the short-circuited state for the preset duration according to the preset rule comprises:
controlling, by the inverter, the input terminals of the Boost circuits one by one to maintain the short-circuited state for the preset duration respectively; or
grouping, by the inverter, the Boost circuits; controlling the input terminals of part of the Boost circuits in a current group to maintain the short-circuited state for the preset duration, and further grouping the Boost circuits in the current group according to states of the input terminals of the Boost circuits in the current group, until the current group comprises one Boost circuit.

11. A photovoltaic system, comprising an inverter and at least one photovoltaic string, wherein
an optimizer or at least two optimizers having output terminals connected in series are arranged between two terminals of the photovoltaic string, and an input terminal of the optimizer is connected to at least one photovoltaic component;
at least one Boost circuit is provided at a preceding stage of a direct-current bus of the inverter, and an input terminal of the Boost circuit is configured to be connected to the at least one corresponding photovoltaic string; and
the inverter comprises a controller serving as a master node to communicate with the optimizer, and the controller is configured to perform the optimizer positioning method for the parallel-connected photovoltaic strings in the photovoltaic system according to any one of claims 1 to 10.

12. The photovoltaic system according to claim 11, wherein the Boost circuit is independent of the inverter; or
the Boost circuit is integrated in the inverter, and an output terminal of the Boost circuit is connected to a direct-current side of an inversion circuit in the inverter through the direct-current bus.

13. The photovoltaic system according to claims 11 or 12, wherein the input terminal of the Boost circuit is connected to one connection port at a direct-current side of the inverter, or at least two connection ports connected in parallel at the direct-current side of the inverter; and
the connection port is connected to one photovoltaic string, or the connection port is connected in parallel to at least two photovoltaic strings through a bus bar terminal.
